(19) Europäisches Patentamt / European Patent Office / Office européen des brevets

(11) **EP 2 086 191 A1**

(12) # EUROPEAN PATENT APPLICATION

(43) Date of publication:
**05.08.2009 Bulletin 2009/32**

(51) Int Cl.:
**H04L 25/03** (2006.01)

(21) Application number: **08001944.1**

(22) Date of filing: **01.02.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Himax Technologies Limited**
**Fonghua Village**
**Sinshih Township, Tainan County, Taiwan (CN)**

(72) Inventor: **Jiang, Jeng-Shiann**
**Sinshih Township**
**Tainan County (TW)**

(74) Representative: **Görz, Ingo**
**Hoefer & Partner**
**Patentanwälte**
**Pilgersheimer Strasse 20**
**81543 München (DE)**

Remarks:
Amended claims in accordance with Rule 137(2) EPC.

(54) **Equalizer and related method**

(57)      An equalizer (200) includes a feed-forward filter (220), a feedback filter (260), and a checking module (280). The feed-forward filter (220) is used for reducing post-echo with N taps. The feedback filter (260) is coupled to the feed-forward filter (220) for reducing post-echo with M taps, wherein N and M are both integers, and N is smaller than M. The checking module (280) is coupled to the feed-forward filter (220) and the feedback filter (260) for checking whether a tap number of a current tap utilized for reducing post-echo exceeds N to generate a checking result. A target tap coefficient with the tap number of the current tap in the feedback filter (260) is assigned with a designated value when the checking result indicates that the tap number of the current tap utilized for reducing post-echo does not exceed N.

FIG. 2

**Description**

The present invention relates to an equalizer and related method for lowering error rate of an equalizer according to the pre-characterizing clauses of claims 1 and 6.

Recently, a decision feedback equalizer (DFE) is one kind of wide-spreading equalizers. Because the DFE can remove post echo effect completely, its performance is much better than that of a transversal filter in early periods. However, the DFE has a disadvantage of error propagation. That is to say, if there is an error occurred in the detected symbol, there is also an error occurred in its feedback value. This error will result in a wrong detection and thereby lead to a chain reaction. Such error propagation becomes much more serious if post-echo has a large intensity. Hence, the DFE in the prior art should be improved further.

This in mind, the present invention aims at providing an equalizer and related method that prevents error propagation caused by the equalizer.

This is achieved by an equalizer and method thereof according to claims 1 and 6. The dependent claims pertain to corresponding further developments and improvements.

As will be seen more clearly from the detailed description following below, the claimed equalizer includes a feed-forward filter, a feedback filter, and a checking module. The feed-forward filter is used for reducing post-echo with N taps. The feedback filter is coupled to the feed-forward filter for reducing post-echo with M taps, wherein N and M are both integers, and N is smaller than M. The checking module is coupled to the feed-forward filter and the feedback filter for checking whether a tap number of a current tap utilized for reducing post-echo exceeds N to generate a checking result. A target tap coefficient with the tap number of the current tap in the feedback filter is assigned with a designated value when the checking result indicates that the tap number of the current tap utilized for reducing post-echo does not exceed N.

In addition, as will be seen more clearly from the detailed description following below, the claimed method includes using the feed-forward filter to reduce post-echo with N taps, using a feedback filter to reduce post-echo with M taps, and checking whether a tap number of a current tap utilized for reducing post-echo exceeds N to generate a checking result, wherein N and M are both integers, and N is smaller than M. A target tap coefficient with the tap number of the current tap in the feedback filter is assigned with a designated value when the checking result indicates that the tap number of the current tap utilized for reducing post-echo does not exceed N.

In the following, the invention is further illustrated by way of example, taking reference to the accompanying drawings. Thereof

FIG.1 is a diagram of an equalizer according to the prior art;
FIG.2 is a diagram of an equalizer according to an embodiment of the present invention;
FIG.3 is a flowchart illustrating a method for lowering error rate of an equalizer according to an embodiment of the present invention;
FIG.4 is a flowchart illustrating a method for lowering error rate of an equalizer according to another embodiment of the present invention; and
FIG.5 is a diagram showing a table presenting performance comparison between the equalizers shown in FIG.1 and FIG.2.

Certain terms are used throughout the following description and claims to refer to particular components. As one skilled in the art will appreciate, hardware manufacturers may refer to a component by different names. This document does not intend to distinguish between components that differ in name but in function. In the following discussion and in the claims, the terms "include", "including", "comprise", and "comprising" are used in an open-ended fashion, and thus should be interpreted to mean "including, but not limited to ...". The terms "couple" and "coupled" are intended to mean either an indirect or a direct electrical connection. Thus, if a first device couples to a second device, that connection may be through a direct electrical connection, or through an indirect electrical connection via other devices and connections.

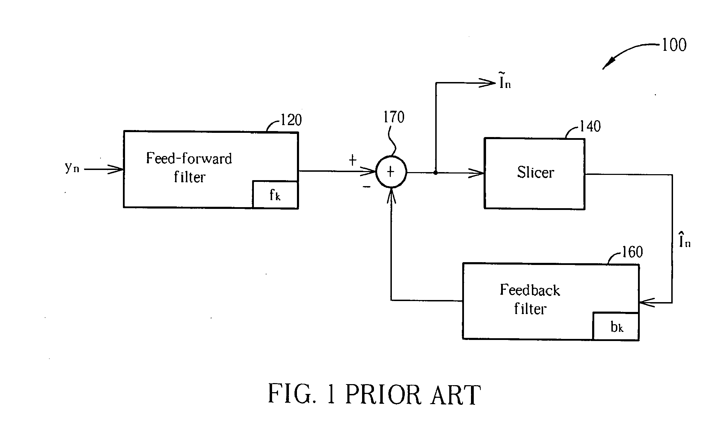

Please refer to FIG.1. FIG.1 is a diagram of an equalizer 100 according to the prior art. The equalizer 100 is a DFE and includes a feed-forward filter 120, a slicer 140, a feedback filter 160, and an adder 170. A mathematical model of the equalizer 100 can be presented by an equation listed in the following:

$$\tilde{I}_n = \sum_{k=(-P)}^{N} y_{n-k} \times f_k + \sum_{k=0}^{M-1} \hat{I}_{n-k-1} \times b_k \qquad (1)$$

In the equation (1) above, $y_n$ represents an input signal of the equalizer 100, and $\tilde{I}_n$ represents an output signal of the equalizer 100, i.e. an estimated value of the output signal. $\hat{I}_n$ represents a detection result for performing a hard decision on $\tilde{I}_n$ by the slicer 140. $f_k$ and $b_k$ respectively represent tap coefficients of the feed-forward filter 120 and the feedback filter 160. The feed-forward filter 120 is used for reducing pre-echo with P taps and for reducing post-echo with N taps. The feedback filter 160 is used for reducing post-echo with M taps. As can be known from the equation (1) above, the post-echo reduction has relations with the tap coefficient $b_k$ (k has a range from 0 to (M-1)) and the tap coefficient $f_k$ (k has a range from 1 to N).

The tap coefficient $f_k$ of the feed-forward filter 120 and the tap coefficient $b_k$ of the feedback filter 160 are updated by using adaptive algorithms in general. One of the commonest adaptive algorithms is least mean square (LMS) algorithm, which can be represented by equations below:

$$f_k(n+1) = f_k(n) + \mu \times e_n \times y_{n-k}, \quad k=-P,\ldots,N \qquad (2)$$

$$b_k(n+1) = b_k(n) + \mu \times e_n \times \hat{I}_{n-k-1}, \quad k=0,\ldots,M-1 \qquad (3)$$

$$e_n = \hat{I}_n - \tilde{I}_n \qquad (4)$$

In the equations above, $\mu$ represents a step size of LMS algorithm. As can be known to those skilled in the art, if the output signal $\tilde{I}_n$ is wrong, a larger error $e_n$ is induced. This larger error $e_n$ will cause the next tap coefficients $f_k(n+1)$ and $b_k(n+1)$ to have an even larger error (so-called error propagation).

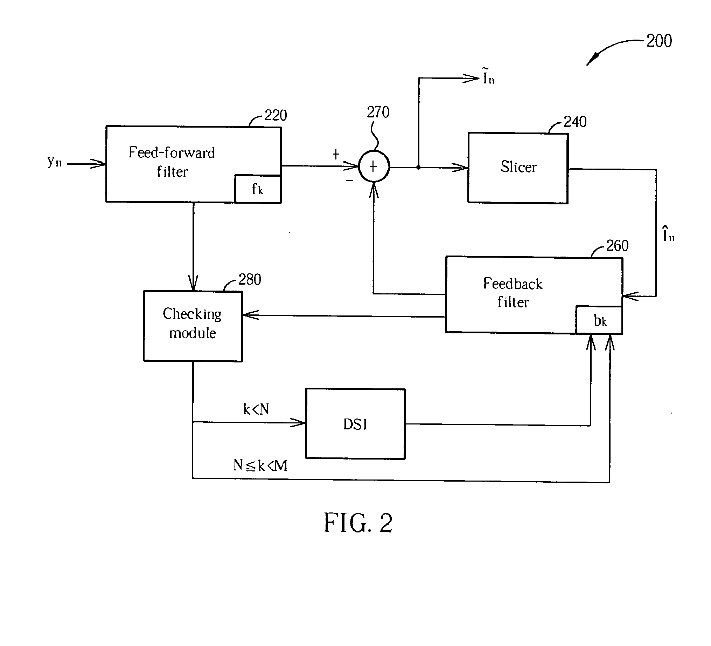

Please refer to FIG.2. FIG.2 is a diagram of an equalizer 200 according to an embodiment of the present invention. In this embodiment, the equalizer 200 is implemented using a DFE with LMS algorithm, but is not limited to this only and can be equalizers of other types. The equalizer 200 includes, but is not limited to, a feed-forward filter 220, a slicer 240, a feedback filter 260, an adder 270, and a checking module 280.

In the following, two examples are taken for illustrating features of the equalizer 200. In a first example, a mathematical model of the equalizer 200 can be presented by equations listed below:

$$\tilde{I}_n = \sum_{k=(-P)}^{N} y_{n-k} \times f_k + \sum_{k=0}^{M-1} \hat{I}_{n-k-1} \times b_k \qquad (5)$$

$$f_k(n+1) = f_k(n) + \mu \times e_n \times y_{n-k}, \quad k=-P,\ldots,N \qquad (6)$$

$$b' = b_k(n) + \mu \times e_n \times \hat{I}_{n-k-1}, \quad k=0,\ldots,M-1 \qquad (7)$$

$$b_k(n+1) = DS1, \quad K<N \qquad (8-1)$$

$$b_k(n+1) = b', \qquad\qquad N \leqq k < M \qquad\qquad (8\text{-}2)$$

$$e_n = \hat{I}_n - \tilde{I}_n \qquad\qquad\qquad (9)$$

In the equation (5) above, $y_n$ represents an input signal of the equalizer 200, and $\tilde{I}_n$ represents an output signal of the equalizer 200, i.e. an estimated value of the output signal. $\hat{I}_n$ represents a detection result for performing a hard decision on $\tilde{I}_n$ by the slicer 240. $f_k$ and $b_k$ respectively represent tap coefficients of the feed-forward filter 220 and the feedback filter 260. The feed-forward filter 220 is used for reducing pre-echo with P taps and for reducing post-echo with N taps. The feedback filter 260 is used for reducing post-echo with M taps. P, N and M are all integers, and N is smaller than M.

Please note that, P, N and M are not fixed, and can be set depending on demands of designers.

Please keep referring to FIG.2. The checking module 280 is coupled to the feed-forward filter 220 and the feedback filter 260 for checking whether a tap number k of a current tap utilized for reducing post-echo exceeds N to generate a checking result. An estimated tap coefficient b' with the tap number k of the current tap in the feedback filter 260 is generated by above equation (7). If the tap number k of the current tap utilized for reducing post-echo does not exceed N (i.e., k<N), a target tap coefficient $b_k(n+1)$ with the tap number k of the current tap in the feedback filter 260 is assigned with a designated value DS1 (i.e., set by above equation (8-1)). If the tap number k of the current tap utilized for reducing post-echo does exceed N (i.e., $N \leqq k < M$), the target tap coefficient $b_k(n+1)$ with the tap number k of the current tap in the feedback filter 260 is equal to the estimated tap coefficient b' (i.e., set by above equation (8-2)). In other words, if k<N, the feed-forward filter 220 has the ability to reduce post-echo. Therefore, the tap weights of the feedback filter 260 are restricted at the designated value DS1 and the feed-forward filter 220 is used for reducing the majority of post-echo. If $N \leqq k < M$, the tap weights of the feedback filter 260 are not restricted and only the feedback filter 260 is used for reducing post-echo. In this way, error propagation can be avoided due to the tap weights of the feedback filter 260 being restricted when k<N.

Please note that, the designated value DS1 is a limited value for constraining the tap weights of the feedback filter 260 and should be a small value, for example, 0.2. However, those skilled in the art should readily appreciate that this is not a limitation of the present invention, and the designated value DS1 can be designed depending on user's demands. Furthermore, the operations how the feed-forward filter 220 reduces pre-echo are not emphases of the present invention and it is therefore not detailed herein for brevity.

In a second example, a mathematical model of the equalizer 200 can be presented by equations listed below:

$$\tilde{I}_n = \sum_{k=(-P)}^{N} y_{n-k} \times f_k + \sum_{k=0}^{M-1} \hat{I}_{n-k-1} \times b_k \qquad\qquad (5)$$

$$f_k(n+1) = f_k(n) + \mu \times e_n \times y_{n-k}, \qquad k=-P,...,N \qquad (6)$$

$$b' = b_k(n) + \mu \times e_n \times \hat{I}_{n-k-1}, \qquad k=0,...,M-1 \qquad (7)$$

$$b_k(n+1) = DS1, \qquad\qquad b'>Th1 \text{ and } K<N \qquad (8\text{-}3)$$

$$b_k(n+1) = b', \qquad\qquad otherwise \qquad\qquad (8-4)$$

$$e_n = \hat{I}_n - \tilde{I}_n \qquad\qquad\qquad (9)$$

The equations employed in the second example are similar to that in the first example. The difference between the second example and the first example is that equations (8-3) and (8-4) in the second example are respectively used for replacing the equations (8-1) and (8-2) in the first example. As mentioned above, the estimated tap coefficient b' with the tap number k of the current tap in the feedback filter 260 is generated by the equation (7). If the tap number k of the current tap utilized for reducing post-echo does not exceed N (i.e., k<N) and the estimated tap coefficient b' with the tap number k of the current tap in the feedback filter 260 exceeds a threshold value Th1 (i.e., b'>Th1), the target tap coefficient $b_k(n+1)$ with the tap number k of the current tap in the feedback filter 260 is assigned with the designated value DS1 (i.e., set by above equation (8-3)); otherwise, the target tap coefficient $b_k(n+1)$ with the tap number k of the current tap in the feedback filter 260 is equal to the estimated tap coefficient b' (i.e., set by above equation (8-4)). In other words, if b'>Th1 and k<N, the feed-forward filter 220 has the ability to reduce post-echo. Therefore, the tap weights of the feedback filter 260 are restricted at the designated value DS1 and the feed-forward filter 220 is used for reducing the majority of post-echo. Otherwise, the tap weights of the feedback filter 260 are not restricted and only the feedback filter 260 is used for reducing post-echo. In this way, error propagation can be avoided due to the tap weights of the feedback filter 260 being restricted when b'>Th1 and k<N.

These embodiments above are presented merely for describing exemplary applications of the present invention, and in no way should be considered to be limitations of the scope of the present invention. It will be obvious to those skilled in the art that various modifications of the mathematical model of the equalizer 200 may be made without departing from the spirit of the present invention.

In one embodiment, the threshold value Th1 can be set equal to the designated value DS1, i.e., Th1 =DS1. But this should not be a limitation of the present invention, the can be set to different values as desired.

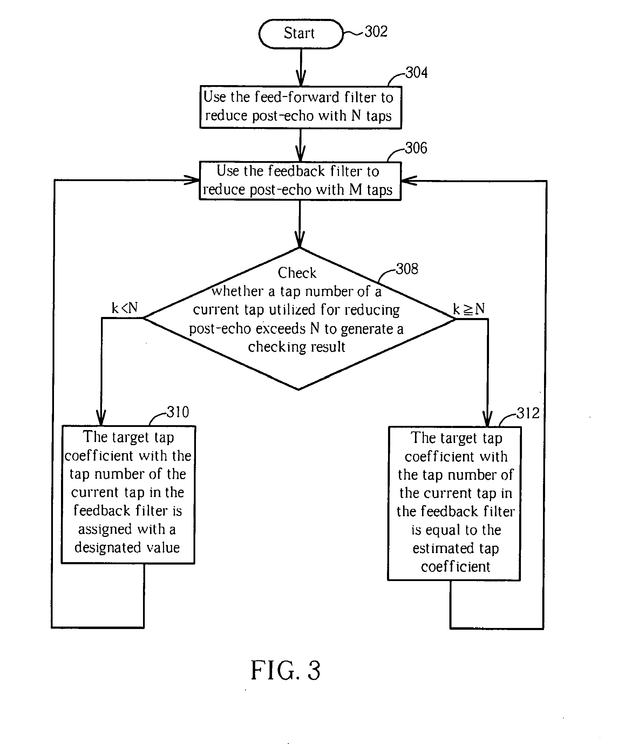

Please refer to FIG.3. FIG.3 is a flowchart illustrating a method for lowering error rate of an equalizer according to an embodiment of the present invention. The method includes, but is not limited to, the following steps:

Step 302: Start.

Step 304: Use the feed-forward filter to reduce post-echo with N taps.

Step 306: Use the feedback filter to reduce post-echo with M taps.

Step 308: Check whether a tap number of a current tap utilized for reducing post-echo exceeds N to generate a checking result. If the tap number of the current tap utilized for reducing post-echo does not exceed N, go to Step 310; otherwise, go to Step 312.

Step 310: The target tap coefficient with the tap number of the current tap in the feedback filter is assigned with a designated value.

Step 312: The target tap coefficient with the tap number of the current tap in the feedback filter is equal to the estimated tap coefficient.

In the following description, the steps shown in FIG.3 are collocated with the components shown in FIG.2 and the mathematical model of the equalizer 200 listed in the first example for further detailed descriptions of operating manners.

In steps 304 and 306, the feed-forward filter 220 is used for reducing post-echo with N taps and the feedback filter 260 is used for reducing post-echo with M taps. In Step 308, the checking module 280 checks whether a tap number k of a current tap utilized for reducing post-echo exceeds N to generate the checking result. If the tap number K of the current tap utilized for reducing post-echo does not exceed N (i.e., k<N), the target tap coefficient $b_k(n+1)$ with the tap number k of the current tap in the feedback filter 260 is assigned with the designated value DS1 (equation (8-1) and Step 310); otherwise, the target tap coefficient $b_k(n+1)$ with the tap number k of the current tap in the feedback filter 260 is equal to the estimated tap coefficient b' (equation (8-2) and Step 312).

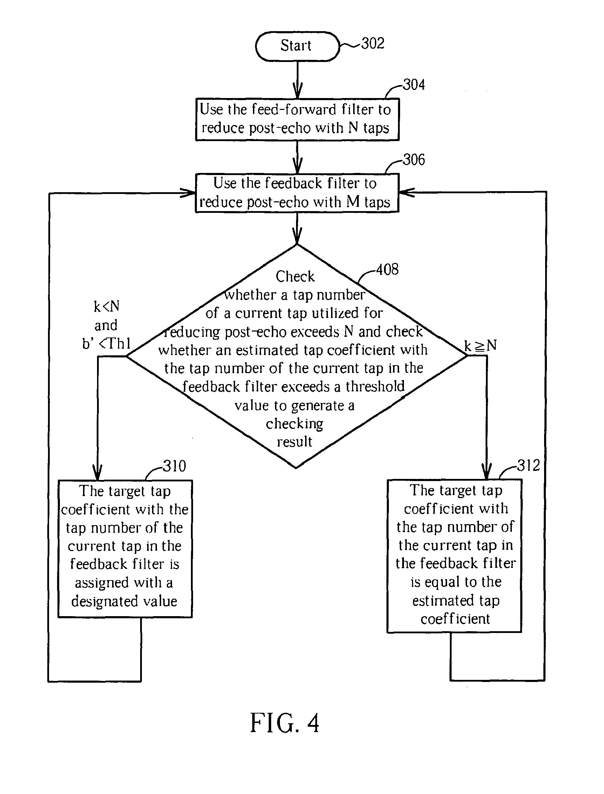

Please refer to FIG.4. FIG.4 is a flowchart illustrating a method for lowering error rate of an equalizer according to another embodiment of the present invention. The method includes, but is not limited to, the following steps:

Step 302: Start.

Step 304: Use the feed-forward filter to reduce post-echo with N taps.

Step 306: Use the feedback filter to reduce post-echo with M taps.

Step 408: Check whether a tap number of a current tap utilized for reducing post-echo exceeds N and check whether an estimated tap coefficient with the tap number of the current tap in the feedback filter exceeds a threshold value to generate a checking result. If the tap number of the current tap utilized for reducing post-echo does not exceed N and the estimated tap coefficient with the tap number of the current tap in the feedback filter exceeds the threshold value, go to Step 310; otherwise, go to Step 312.

Step 310: The target tap coefficient with the tap number of the current tap in the feedback filter is assigned with a designated value.

Step 312: The target tap coefficient with the tap number of the current tap in the feedback filter is equal to the estimated tap coefficient.

The steps shown in FIG.4 are similar to that in FIG.3, and the embodiment of FIG.4 is a variant of the embodiment of FIG.3. The difference between them is that the flow in FIG.4 further checks whether the estimated tap coefficient with the tap number of the current tap in the feedback filter exceeds a threshold value (i.e. the step 408). In the following description, the steps shown in FIG.4 are collocated with the components shown in FIG.2 and the mathematical model of the equalizer 200 listed in the second example for further detailed descriptions of operating manners.

In steps 304 and 306, the feed-forward filter 220 is used for reducing post-echo with N taps and the feedback filter 260 is used for reducing post-echo with M taps. In Step 408, the checking module 280 checks whether a tap number k of a current tap utilized for reducing post-echo exceeds N and whether the estimated tap coefficient b' with the tap number k of the current tap in the feedback filter 260 exceeds a threshold value Th1 to generate the checking result. If the tap number K of the current tap utilized for reducing post-echo does not exceed N and the estimated tap coefficient b' with the tap number k of the current tap in the feedback filter 260 exceeds a threshold value Th1 (i.e., $k<N$ and $b'>Th1$), the target tap coefficient $b_k(n+1)$ with the tap number k of the current tap in the feedback filter 260 is assigned with the designated value DS1 (equation (8-3) and Step 310); otherwise, the target tap coefficient $b_k(n+1)$ with the tap number k of the current tap in the feedback filter 260 is equal to the estimated tap coefficient b' (equation (8-4) and Step 312).

Provided that substantially the same result is achieved, the steps of the method shown in FIG.3 and FIG.4 need not be in the exact order shown and need not be contiguous, that is, other steps can be intermediate.

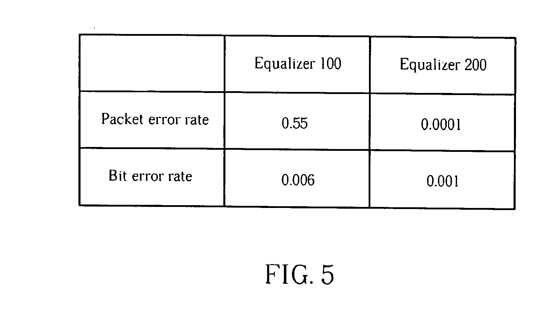

Please refer to FIG.5. FIG.5 is a diagram showing a table presenting performance comparison between the equalizer 100 in FIG.1 and the equalizer 200 in FIG.2. Taking a received signal generated by a digital TV signal generator of Rhode Schwartz for example, its multi-path profile is listed as below:

$$h(t) = \delta(t) + \delta(t-1\mu s) + \delta(t-2\mu s) \qquad (10)$$

The abovementioned multi-path is the Brazil E channel used for verifying ATSC performance, and its carrier-to-noise ratio is set as 25dB. As can be seen from the table in FIG.5, if the equalizer 100 is used for receiving the received signal, its packet error rate reaches to 0.55 and its bit error rate is equal to 0.006. If the equalizer 200 is used for receiving the received signal, its packet error rate is equal to 0.0001 and its bit error rate is 0.001. Both the packet error rate and the bit error rate of the equalizer 200 are substantially improved.

The abovementioned embodiments are presented merely for describing features of the present invention, and in no way should be considered to be limitations of the scope of the present invention. In the abovementioned embodiments, the equalizer 200 is a DFE with LMS algorithm, but is not limited to this configuration only and can be implemented using equalizers of other types. Please note that, P, N and M are not fixed, and can be set depending on demands of designers. In addition, the designated value DS1 and the threshold value TH1 are not fixed, too. Those skilled in the art should readily appreciate that these are not limitations of the present invention, and they can be designed depending on user's demands. In addition, it will be obvious to those skilled in the art that various modifications of the mathematical model of the equalizer 200 may be made without departing from the spirit of the present invention. Furthermore, the steps of the method shown in FIG.3 and FIG.4 need not be in the exact order shown and need not be contiguous, and can include other intermediate steps.

In summary, the present invention provides an equalizer and related method. Through the mathematical models of the equalizer 200 described in the first example and in the second example, both the feed-forward filter 220 and the feedback filter 260 can be used for reducing post-echo. If $K<N$ (or $K<N$ and $b'>Th1$), the tap weights of the feedback filter 260 are restricted at the designated value DS1 and the feed-forward filter 220 is used for reducing the majority of post-echo. Through this way, error propagation can be avoided due to the tap weights of the feedback filter 260 being restricted when $k<N$ (or $K<N$ and $b'>Th1$). Therefore, both the packet error rate and the bit error rate of the equalizer 200 are substantially improved. Furthermore, because the error propagation becomes much more obvious when post-echo has a large intensity, the equalizer 200 and related method disclosed in the present invention are much more suitable for such situations.

All combinations and sub-combinations of above-described features also belong to the invention.

**Claims**

1.   An equalizer (200) comprising:

a feed-forward filter (220), for reducing post-echo with N taps;
a feedback filter (260), coupled to the feed-forward filter (220), for reducing post-echo with M taps, wherein N and M are both integers, and N is smaller than M; and
**characterized by**:

a checking module (280), coupled to the feed-forward filter (220) and the feedback filter (260), for checking whether a tap number of a current tap utilized for reducing post-echo exceeds N to generate a checking result; wherein a target tap coefficient with the tap number of the current tap in the feedback filter (260) is assigned with a designated value when the checking result indicates that the tap number of the current tap utilized for reducing post-echo does not exceed N.

2.   The equalizer (200) of claim 1, **characterized in that** the checking module (280) further checks whether an estimated tap coefficient with the tap number of the current tap in the feedback filter (260) exceeds a threshold value; and the target tap coefficient with the tap number of the current tap in the feedback filter (260) is assigned with the designated value when the checking result indicates that the tap number of the current tap utilized for reducing post-echo does not exceed N and the estimated tap coefficient with the tap number of the current tap in the feedback filter (260) exceeds the threshold value.

3.   The equalizer (200) of claim 2, **characterized in that** the threshold value is equal to the designated value.

4.   The equalizer (200) of claim 1, **characterized in that** the equalizer (200) is an adaptive decision feedback equalizer with LMS (least mean square) algorithm.

5.   The equalizer (200) of claim 4, **characterized in that** the estimated tap coefficient with the tap number of the current tap in the feedback filter (260) is generated by LMS (least mean square) algorithm.

6.   A method for lowering error rate of an equalizer (200), the equalizer (200) having a feed-forward filter (220) and a feedback filter (260), the method comprising:

using the feed-forward filter (220) to reduce post-echo with N taps;
using a feedback filter (260) to reduce post-echo with M taps,
wherein N and M are both integers, and N is smaller than M; and
**characterized by**:

checking whether a tap number of a current tap utilized for reducing post-echo exceeds N to generate a checking result; wherein a target tap coefficient with the tap number of the current tap in the feedback filter (260) is assigned with a designated value when the checking result indicates that the tap number of the current tap utilized for reducing post-echo does not exceed N.

7.   The method of claim 6, **characterized by**:

checking whether an estimated tap coefficient with the tap number of the current tap in the feedback filter (260) exceeds a threshold value;

wherein the target tap coefficient with the tap number of the current tap in the feedback filter (260) is assigned with the designated value when the checking result indicates that the tap number of the current tap utilized for reducing post-echo does not exceed N and the estimated tap coefficient with the tap number of the current tap in the feedback filter (260) exceeds the threshold value.

8. The method of claim 7, **characterized in that** the threshold value is equal to the designated value.

9. The method of claim 6, **characterized in that** the equalizer (200) is an adaptive decision feedback equalizer with LMS (least mean square) algorithm.

10. The method of claim 9, **characterized in that** the estimated tap coefficient with the tap number of the current tap in the feedback filter (260) is generated by LMS (least mean square) algorithm.


**Amended claims in accordance with Rule 137(2) EPC.**

**1.** An equalizer (200) comprising:

a feed-forward filter (220), for reducing post-echo with N taps;
a feedback filter (260), coupled to the feed-forward filter (220), for reducing post-echo with M taps, wherein N and M are both integers, and a predetermined number of tap coefficients of the feedback filter, beginning from the first tap coefficient are assigned with a designated value, and

**characterized in that** N is smaller than M; and
**characterized by**:

a checking module (280), coupled to the feed-forward filter (220) and the feedback filter (260), for checking whether a tap number of a current tap utilized for reducing post-echo exceeds N to generate a checking result;

wherein a target tap coefficient with the tap number of the current tap in the feedback filter (260) is assigned with a designated value when the checking result indicates that the tap number of the current tap utilized for reducing post-echo does not exceed N.

**2.** The equalizer (200) of claim 1, **characterized in that** the checking module (280) further checks whether an estimated tap coefficient with the tap number of the current tap in the feedback filter (260) exceeds a threshold value; and the target tap coefficient with the tap number of the current tap in the feedback filter (260) is assigned with the designated value when the checking result indicates that the tap number of the current tap utilized for reducing post-echo does not exceed N and the estimated tap coefficient with the tap number of the current tap in the feedback filter (260) exceeds the threshold value.

**3.** The equalizer (200) of claim 2, **characterized in that** the threshold value is equal to the designated value.

**4.** The equalizer (200) of claim 1, **characterized in that** the equalizer (200) is an adaptive decision feedback equalizer with LMS (least mean square) algorithm.

**5.** The equalizer (200) of claim 2, **characterized in that** the estimated tap coefficient with the tap number of the current tap in the feedback filter (260) is generated by LMS (least mean square) algorithm.

**6.** A method for lowering error rate of an equalizer (200), the equalizer (200) having a feed-forward filter (220) and a feedback filter (260), the method comprising:

using the feed-forward filter (220) to reduce post-echo with N taps;
using a feedback filter (260) to reduce post-echo with M taps, wherein N and M are both integers, and a predetermined number of tap coefficients of the feedback filter, beginning from the first tap coefficient are assigned with a designated value, and

**characterized in that** N is smaller than M; and
**characterized by**:

checking whether a tap number of a current tap utilized for reducing post-echo exceeds N to generate a checking result;

wherein a target tap coefficient with the tap number of the current tap in the feedback filter (260) is assigned with a designated value when the checking result indicates that the tap number of the current tap utilized for reducing post-echo does not exceed N.

**7.** The method of claim 6, **characterized by**:

checking whether an estimated tap coefficient with the tap number of the current tap in the feedback filter (260) exceeds a threshold value;

wherein the target tap coefficient with the tap number of the current tap in the feedback filter (260) is assigned with the designated value when the checking result indicates that the tap number of the current tap utilized for reducing post-echo does not exceed N and the estimated tap coefficient with the tap number of the current tap in the feedback filter (260) exceeds the threshold value.

**8.** The method of claim 7, **characterized in that** the threshold value is equal to the designated value.

**9.** The method of claim 6, **characterized in that** the equalizer (200) is an adaptive decision feedback equalizer with LMS (least mean square) algorithm.

**10.** The method of claim 7, **characterized in that** the estimated tap coefficient with the tap number of the current tap in the feedback filter (260) is generated by LMS (least mean square) algorithm.

FIG. 1 PRIOR ART

FIG. 2

Start —302

Use the feed-forward filter to
reduce post-echo with N taps ⌐304

Use the feedback filter to
reduce post-echo with M taps ⌐306

Check
whether a tap number of a
current tap utilized for reducing
post-echo exceeds N to generate a
checking result ⌐308

$k < N$

$k \geqq N$

The target tap
coefficient with the
tap number of the
current tap in the
feedback filter is
assigned with a
designated value ⌐310

The target tap
coefficient with
the tap number of
the current tap in
the feedback filter
is equal to the
estimated tap
coefficient ⌐312

FIG. 3

Start —302

Use the feed-forward filter to
reduce post-echo with N taps —304

Use the feedback filter to
reduce post-echo with M taps —306

Check
whether a tap number
of a current tap utilized for
reducing post-echo exceeds N and check
whether an estimated tap coefficient with
the tap number of the current tap in the
feedback filter exceeds a threshold
value to generate a
checking
result —408

k<N
and
b'<Th1

k≧N

The target tap
coefficient with the
tap number of the
current tap in the
feedback filter is
assigned with a
designated value —310

The target tap
coefficient with
the tap number of
the current tap in
the feedback filter
is equal to the
estimated tap
coefficient —312

FIG. 4

|  | Equalizer 100 | Equalizer 200 |
|---|---|---|
| Packet error rate | 0.55 | 0.0001 |
| Bit error rate | 0.006 | 0.001 |

FIG. 5

**European Patent Office**

**EUROPEAN SEARCH REPORT**

Application Number

EP 08 00 1944

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/001540 A1 (JONES WILLIAM [US]) 1 January 2004 (2004-01-01) * abstract; figures 5,7 * * paragraph [0018] * * paragraph [0057] - paragraph [0083] * * paragraph [0093] - paragraph [0094] * ----- | 1-10 | INV. H04L25/03 |
| X | XUAN HUAN NGUYEN ET AL: "On the constrained MMSE decision feedback equalization for MIMO wireless systems" ASIA-PACIFIC CONFERENCE ON COMMUNICATIONS, 3 October 2005 (2005-10-03), pages 329-333, XP010860796 PISCATAWAY, NJ, USA,IEEE ISBN: 978-0-7803-9132-1 sections I-III ----- | 1-10 | |
| X | US 2004/252755 A1 (JAFFE STEVEN T [US] ET AL) 16 December 2004 (2004-12-16) * figure 3 * * paragraph [0055] - paragraph [0065] * * paragraph [0098] - paragraph [0103] * ----- | 1-10 | |
| X | WO 03/034673 A (KONINKL PHILIPS ELECTRONICS NV [NL]) 24 April 2003 (2003-04-24) * abstract; figures 3,5,6 * * page 4, line 9 - page 5, line 12 * * page 9, line 20 - page 12, line 15 * ----- -/-- | 1-10 | TECHNICAL FIELDS SEARCHED (IPC) H04L H04N |

The present search report has been drawn up for all claims

| Place of search | Date of completion of the search | Examiner |
|---|---|---|
| The Hague | 24 September 2008 | Faber, Thomas |

<table>
<tr><td>European Patent Office</td><td>**EUROPEAN SEARCH REPORT**</td><td>Application Number<br>EP 08 00 1944</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | IAN J FEVRIER ET AL: "Reduced Complexity Decision Feedback Equalization for Multipath Channels with Large Delay Spreads"<br>IEEE TRANSACTIONS ON COMMUNICATIONS,<br>vol. 47, no. 6, 1 June 1999 (1999-06-01),<br>XP011009428<br>IEEE SERVICE CENTER, PISCATAWAY, NJ, US<br>ISSN: 0090-6778<br>section III-VI<br>----- | 2-5,7-10 | |
| | | | TECHNICAL FIELDS SEARCHED (IPC) |

The present search report has been drawn up for all claims

| Place of search | Date of completion of the search | Examiner |
|---|---|---|
| The Hague | 24 September 2008 | Faber, Thomas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................
& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 08 00 1944

This annex lists the patent family members relating to the patent documents cited in the above-mentioned European search report.
The members are as contained in the European Patent Office EDP file on
The European Patent Office is in no way liable for these particulars which are merely given for the purpose of information.

24-09-2008

| Patent document cited in search report | | Publication date | Patent family member(s) | | Publication date |
|---|---|---|---|---|---|
| US 2004001540 | A1 | 01-01-2004 | AU | 2003253733 A1 | 19-01-2004 |
| | | | CN | 1675837 A | 28-09-2005 |
| | | | EP | 1540820 A2 | 15-06-2005 |
| | | | JP | 2005531989 T | 20-10-2005 |
| | | | WO | 2004004192 A2 | 08-01-2004 |
| | | | US | 2006007997 A1 | 12-01-2006 |
| | | | US | 2005025229 A1 | 03-02-2005 |
| US 2004252755 | A1 | 16-12-2004 | NONE | | |
| WO 03034673 | A | 24-04-2003 | AT | 354235 T | 15-03-2007 |
| | | | CN | 1636107 A | 06-07-2005 |
| | | | DE | 60218206 T2 | 31-10-2007 |
| | | | EP | 1449337 A2 | 25-08-2004 |
| | | | JP | 2005506760 T | 03-03-2005 |
| | | | US | 2003099289 A1 | 29-05-2003 |

EPO FORM P0459

For more details about this annex : see Official Journal of the European Patent Office, No. 12/82